# EUROPEAN PATENT APPLICATION

(11) **EP 4 693 554 A1**
(43) Date of publication of application: **11.02.2026**
(21) Application number: 23932352.0
(22) Date of filing: 10.04.2023
(51) Int. Cl.: H01M 10/0525, H01M 50/409

(54) **ISOLATION FILM AND SECONDARY BATTERY AND ELECTRIC APPARATUS RELATED THERETO**

(71) Applicant: Contemporary Amperex Technology Co., Limited, Ningde, Fujian 352100 (CN)
(72) Inventor: MU, Xueying, Ningde, Fujian 352100 (CN); YANG, Jianrui, Ningde, Fujian 352100 (CN); SUN, Chengdong, Ningde, Fujian 352100 (CN); OUYANG, Chuying, Ningde, Fujian 352100 (CN); HUANG, Siying, Ningde, Fujian 352100 (CN); WANG, Yaohui, Ningde, Fujian 352100 (CN)
(74) Representative: Gong, Jinping
(86) International application number: PCT/CN2023/087329
(87) International publication number: WO 2024/212052

(57) **Abstract**

Embodiments of the present application provide an isolation film, a preparation method therefor, and a secondary battery and an electric apparatus related thereto. The isolation film comprises a first porous base film, a second porous base film, and a coating layer. The coating layer is arranged between the first porous base film and the second porous base film. The coating layer comprises first particles. The first particles comprise at least one of molybdenum disulfide, silicon oxide, a transition metal oxide, or conductive carbon particles.

## Description

### TECHNICAL FIELD

The present application relates to the field of batteries, and in particular, to a separator and a related secondary battery and an electric device.

### BACKGROUND

Secondary batteries have the characteristics of high capacity and long lifespan and are therefore widely used in electronic devices such as mobile phones, laptop computers, electric bicycles, electric vehicles, electric airplanes, electric ships, electric toy cars, electric toy ships, electric toy airplanes, and electric tools.

As the applications of batteries become increasingly widespread, the requirements for the performance of secondary batteries are also becoming more stringent, especially regarding the safety performance of secondary batteries. Further enhancing the reliability of batteries during use remains one of the key challenges that those skilled in the art need to continuously overcome.

### SUMMARY

The present application is conducted in view of the above issues, and its objective is to provide a separator and a related secondary battery and an electric device.

A first aspect of the present application provides a separator. The separator includes a first porous base film, a second porous base film, and a coating layer. The coating layer is disposed between the first porous base film and the second porous base film. The coating layer includes first particles, and the first particles include at least one of molybdenum disulfide, silicon oxide, transition metal oxide, or conductive carbon particles.

Therefore, in the separator according to the embodiments of the present application, the coating layer is disposed between the first porous base film and the second porous base film. During the normal charging and discharging of the secondary battery, the separator can effectively isolate the positive electrode plate from the negative electrode plate. When the growth of metallic dendrites within the secondary battery increases, the coating layer in the separator can undergo a redox reaction with the metallic dendrites. This reduces the risk of the dendrites piercing through the separator and causing direct contact between the positive electrode plate and the negative electrode plate, thereby effectively enhancing the reliability of the secondary battery in usage.

In some embodiments, the first particles include at least one of the molybdenum disulfide or the transition metal oxide.

In some embodiments, the silicon oxide includes at least one of silicon(II) oxide or silicon dioxide.

In some embodiments, the transition metal oxide includes one or more of manganese dioxide, cobalt oxide, iron oxide, or nickel oxide.

In some embodiments, the conductive carbon particles include one or more of conductive carbon black, carbon nanotubes, graphite, or graphene.

In some embodiments, based on a total weight of the coating layer, a content of the first particles is greater than or equal to 20%, optionally 30% to 60%. When the content of the first particles falls within the above range, the first particles can sufficiently react with alkali metals and/or alkaline earth metals, thereby reducing the risk of metallic dendrites piercing through the separator, and further enhancing the reliability of the secondary battery in usage.

In some embodiments, an average particle size of the first particles is less than or equal to 3 µm, optionally 0.01 µm to 1 µm.

When the average particle size of the first particles falls within the above range, the first particles are not excessively large, making them easy to distribute uniformly. Moreover, the contact area between the first particles and the alkali metals and/or alkaline earth metals is relatively large, which helps to promote the redox reaction. Additionally, the small particle size of the first particles facilitates a lightweight and thin application of the coating layer, thus reducing the overall thickness of the separator. This increases the space occupied by the positive electrode plate and/or the negative electrode plate, enhancing the energy density of the secondary battery.

In some embodiments, the coating layer further includes second particles, and the second particles do not undergo oxidation and reduction reactions within an operating voltage range of a secondary battery. The second particles exhibit relatively good heat resistance and can improve the overall heat resistance of the separator.

In some embodiments, the second particles include at least one of inorganic particles or organic particles.

In some embodiments, the inorganic particles include one or more of boehmite γ-AlOOH, aluminum oxide Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, zirconium titanate SrTiO₃, barium titanate BaTiO₃, and magnesium fluoride MgF₂.

In some embodiments, the organic particles include at least one of polystyrene, polyethylene, polyimide, melamine resin, phenolic resin, polypropylene, polyesters (e.g., polyethylene terephthalate, polyethylene naphthalate, and polybutylene terephthalate), polyphenylene sulfide, polyaramide, polyamideimide, polyimide, a copolymer of butyl acrylate and ethyl methacrylate, and a mixture thereof.

In some embodiments, based on the total weight of the coating layer, a ratio of a content of the second particles to the content of the first particles is less than or equal to 1, optionally 0.35 to 0.85. When the content ratio of the second particles to the first particles falls within the above range, it can both improve the heat resistance of the separator and reduce the risk of the separator being pierced through by metallic dendrites.

In some embodiments, the coating layer includes at least two sub-coating layers, with the first particles and the second particles disposed in different sub-coating layers. By arranging the first particles and the second particles in different layers, the likelihood of the second particles interfering with the first particles is reduced, which facilitates the first particles in mitigating the continued growth of dendrites.

In some embodiments, the coating layer includes a binder; optionally, the binder includes one or more of polyacrylate, acrylic acid, carboxymethylcellulose, polyvinylidene fluoride-co-trichloroethylene copolymer, polymethyl methacrylate, polyvinylpyrrolidone, polyvinyl acetate, polyethylene-co-vinyl acetate copolymer, polyethylene oxide, polyarylate, cellulose acetate, cellulose acetate butyrate, cellulose acetate propionate, polyvinylidene fluoride, polyacrylonitrile, polyvinyl alcohol, starch, hydroxypropyl cellulose, regenerated cellulose, tetrafluoroethylene, polyethylene, polypropylene, or cyanoethyl branched starch.

In some embodiments, a melting point of the first porous base film is different from a melting point of the second porous base film.

In some embodiments, the melting point of the first porous base film is denoted as Tₘ₁, and the melting point of the second porous base film is denoted as Tₘ₂, such that the separator satisfies: 1.05 ≤ Tₘ₁/Tₘ₂ ≤ 2.50.

In some embodiments, 160 °C ≤ Tₘ₁ ≤ 350 °C, optionally 180 °C ≤ Tₘ₁ ≤ 320 °C.

In some embodiments, 120 °C ≤ Tₘ₂ ≤ 160 °C, optionally 135 °C ≤ Tₘ₂ ≤ 150 °C.

In some embodiments, the coating layer includes a first sub-coating layer and a second sub-coating layer, the first sub-coating layer including the first particles, and the second sub-coating layer including the second particles. Moreover, the first sub-coating layer is disposed between the first porous base film and the second sub-coating layer, or the first sub-coating layer is disposed between the second porous base film and the second sub-coating layer.

In some embodiments, a thickness of the first porous base film is denoted as W₁, measured in µm; a thickness of the second porous base film is denoted as W₂, measured in µm, and W₁/W₂ ≥ 1.02, optionally 1.2 ≤ W₁/W₂ ≤ 5.0.

In some embodiments, 1 ≤ W₁ ≤ 12, optionally 3 ≤ W₁ ≤ 6.

In some embodiments, 2 ≤ W₂ ≤ 12, optionally 3 ≤ W₂ ≤ 5.

In some embodiments, the separator satisfies at least one of conditions (1) to (6):
(1) a machine direction thermal shrinkage of the separator is less than or equal to 1.0% at 250 °C for 1 hour;
(2) a transverse direction thermal shrinkage of the separator is less than or equal to 1.0% at 250 °C for 1 hour;
(3) an air permeability of the separator is less than or equal to 500 s/100cc, optionally 150 s/100cc to 400 s/100cc;
(4) a machine direction tensile strength of the separator is greater than or equal to 600 kg/cm², optionally 800 kg/cm² to 2000 kg/cm²;
(5) a transverse direction tensile strength of the separator is greater than or equal to 1000 kg/cm², optionally 1200 kg/cm² to 2500 kg/cm²; and
(6) an ionic conductivity of the separator ranges from 0.5 mS/cm to 2.0 mS/cm, optionally 0.8 mS/cm to 1.5 mS/cm.

A second aspect of the present application provides a secondary battery. The secondary battery includes the separator according to any one of the embodiments of the first aspect of the present application or a separator prepared by the preparation method according to any one of the embodiments of the second aspect of the present application.

In some embodiments, the secondary battery includes a positive electrode plate and a negative electrode plate, and the separator is disposed between the positive electrode plate and the negative electrode plate; the second porous base film of the separator faces the negative electrode plate.

A third aspect of the present application provides an electric device. The electric device includes the secondary battery according to the second aspect of the present application.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts.
FIG. 1 is a schematic diagram of one embodiment of a secondary battery according to the present application.
FIG. 2 is a schematic exploded view of the embodiment of the secondary battery in FIG. 1.
FIG. 3 is a schematic diagram of one embodiment of a battery module of the present application.
FIG. 4 is a schematic diagram of one embodiment of a battery pack of the present application.
FIG. 5 is a schematic exploded view of the embodiment of the battery pack shown in FIG. 4.
FIG. 6 is a schematic diagram of one embodiment of an electric device including the secondary battery according to the present application as a power source.

The drawings are not necessarily drawn to scale.

Reference numerals in the drawings are explained as follows:
1. Battery pack; 2. Upper case body; 3. Lower case body; 4. Battery module;
5. Secondary battery; 51. Housing; 52. Electrode assembly;
53. Cover plate;
6. Electric device.

### DETAILED DESCRIPTION

Hereinafter, specific embodiments of a separator and a related secondary battery thereof and an electric device disclosed in the present application will be described in detail. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions. Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

In the present application, terms such as "first" and "second" are used for descriptive purposes only and shall not be construed as indicating or implying relative importance.

In the present application, the terms "a plurality of" and "multiple" mean two or more.

Unless otherwise specified, the terms used in the present application have well-known meanings that are commonly understood by those skilled in the art.

Unless otherwise specified, the values of the parameters mentioned in the present application can be measured by various test methods commonly used in the art. For example, they can be measured according to the test methods given in the examples of the present application.

The secondary battery includes a positive electrode plate, a negative electrode plate, a separator, and an electrolyte. The separator is disposed between the positive electrode plate and the negative electrode plate, primarily serving to prevent short circuits between the positive electrode plate and the negative electrode plate while allowing active ions to pass through freely to form a circuit.

With the increasing application and promotion of secondary batteries, there are growing demands for the performance (e.g., safety performance) of secondary batteries. The separator is a critical component of the secondary battery, and improving the performance of the separator can enhance the reliability of the secondary battery in usage.

During the charging process of a secondary battery, metal ions migrate from the positive electrode plate to the negative electrode plate. On the surface of the negative electrode plate, the metal ions gain electrons and undergo intercalation or deposition. As the number of charging cycles increases, incomplete metal intercalation or deposition leads to the formation of dendrites. The dendrites may puncture the separator, causing a short circuit between the positive electrode plate and the negative electrode plate, thereby compromising the reliability of the secondary battery in usage. To enhance the reliability of the secondary battery in usage, in the related art, an active substance is coated on the surface of the polymer separator. However, since the active substance is exposed to the negative electrode interface, the active substance undergoes redox reactions with the negative electrode plate and is consumed before it can act on the dendrites. Consequently, the active substance fails to effectively act with the dendrites, and thus, the reliability of the secondary battery in usage remains unimproved.

In view of the above issues, the separator according to the embodiments of the present application includes a first porous base film and a second porous base film. The first porous base film and the second porous base film can provide the separator with excellent mechanical properties. A coating layer is disposed between the first porous base film and the second porous base film. During the normal charging and discharging processes of the secondary battery, the separator can effectively isolate the positive electrode plate from the negative electrode plate, thereby providing insulation. Moreover, the coating layer is resistant to side reactions with the electrolyte or the negative electrode plate. As the number of dendrites deposited on the negative electrode plate increases, the dendrites may puncture one of the base films outside the coating layer, such as the second porous base film, and come into direct contact with the coating layer. The first particles in the coating layer can undergo redox reactions with active ions, such as lithium ions, near the tips of the dendrites. This reduces the risk of the dendrites further puncturing the other base film, such as the first porous base film, which could lead to a short circuit between the positive electrode plate and the negative electrode plate. Consequently, the reliability of the secondary battery in usage is enhanced. Next, the technical solutions of the embodiments of the present application will be described in detail.

### Separator

In a first aspect, the present application provides a separator. The separator is applied to a secondary battery.

The separator includes a first porous base film, a second porous base film, and a coating layer. The coating layer is disposed between the first porous base film and the second porous base film. The coating layer includes first particles, and the first particles include at least one of molybdenum disulfide, silicon oxide, transition metal oxide, or conductive carbon particles.

The separator includes the first porous base film and the second porous base film. The first porous base film and the second porous base film can provide the separator with excellent mechanical properties. This can effectively isolate the positive electrode plate and the negative electrode plate of the secondary battery, thereby reducing the risk of a short circuit between the positive electrode plate and the negative electrode plate.

The coating layer is disposed between the first porous base film and the second porous base film. Due to the protection provided by the first porous base film and the second porous base film, the coating layer is largely prevented from directly contacting the negative electrode active substance. This reduces the risk of the coating layer being prematurely consumed through redox reactions, which could lead to the failure of the coating layer. During the normal charging and discharging processes of the secondary battery, metal ions (such as alkali metal ions and/or alkaline earth metal ions) migrate to the surface of the negative electrode active substance, where the metal ions gain electrons and undergo intercalation or deposition. As the number of cycles increases, metallic dendrites gradually form. Since the base film exhibits a certain level of mechanical strength, the base film can mitigate the risk of metallic dendrites puncturing the base film to a certain extent when the amount of the deposited metallic dendrites is small. As the amount of the deposited metallic dendrites increases, the metallic dendrites may puncture the base film (e.g., the second porous base film) and come into contact with the first particles in the coating layer. The first particles undergo a redox reaction with lithium ions near the metallic dendrites, passivating the growth of the dendritic tips. This reduces the risk of the dendrites further puncturing the other base film (e.g., the first porous base film) and causing a short circuit between the positive electrode plate and the negative electrode plate, thereby enhancing the reliability of the secondary battery in usage.

In the separator according to the embodiments of the present application, the coating layer is disposed between the first porous base film and the second porous base film. During the normal charging and discharging of the secondary battery, the separator can effectively isolate the positive electrode plate from the negative electrode plate. When the growth of metallic dendrites within the secondary battery increases, the coating layer in the separator can undergo a redox reaction with the metallic dendrites. This reduces the risk of the dendrites piercing through the separator and causing direct contact between the positive electrode plate and the negative electrode plate, thereby effectively enhancing the reliability of the secondary battery in usage.

In the embodiments of the present application, during the redox reaction between the first particles and alkali metals and/or alkaline earth metals, gas is essentially not generated, thereby maintaining relatively stable air pressure within the secondary battery. Moreover, the first particles exhibit good stability in the electrolyte and are not prone to a side reaction with the electrolyte. Optionally, the first particles include at least one of the molybdenum disulfide or the transition metal oxide.

In the embodiments of the present application, the operating voltage of the secondary battery refers to the voltage exhibited by the secondary battery during normal operation and is also referred to as the working voltage, which can be measured using a multimeter. For example, the operating voltage of a lithium-ion battery may be 3.6 V. The first particles are capable of undergoing a redox reaction with alkali metals and/or alkaline earth metals under the operating voltage of the secondary battery.

In some embodiments, the alkali metal includes one or more of lithium metal, sodium metal, potassium metal, rubidium metal, cesium metal, or francium metal.

In some embodiments, the alkaline earth metal includes one or more of magnesium metal, calcium metal, strontium metal, or barium metal.

The aforementioned alkali metals and/or alkaline earth metals, as elemental metals, exhibit strong reducibility and are capable of undergoing a redox reaction with the first particles in the coating layer.

Alkali metal ions and/or alkaline earth metal ions can serve as metal ions for the secondary battery and migrate between the positive electrode plate and the negative electrode plate, thereby enabling the charging and discharging of the secondary battery. Moreover, alkali metals and/or alkaline earth metals, as elemental metals, exhibit a certain degree of reducibility and are capable of undergoing a redox reaction with the first particles in the coating layer. This process passivates dendrites and reduces the risk of metallic dendrites piercing through the separator, thus further enhancing the reliability of the secondary battery in usage.

The first particles are substances that are conductive or exhibit high reactivity, and the first particles are capable of undergoing a redox reaction with alkali metals and/or alkaline earth metals. The first particles are disposed between two layers of base film, which can effectively reduce the risk of premature reaction between the first particles and the negative electrode active substance, thereby preventing the first particles from being consumed and rendered ineffective.

Exemplarily, the conductive carbon particles include one or more of conductive carbon black, carbon nanotubes, graphite, or graphene.

Exemplarily, the transition metal oxide includes one or more of manganese dioxide MnO₂, cobalt oxides, iron oxides, or nickel oxides. Specifically, the cobalt oxides include tricobalt tetroxide Co₃O₄ and/or cobalt oxide CoO. The iron oxides include one or more of ferric oxide Fe₂O₃, ferrous oxide FeO, or triiron tetraoxide Fe₃O₄. The nickel oxides include nickel oxide NiO and/or nickel sesquioxide Ni₂O₃.

Exemplarily, the silicon oxides include silicon dioxide SiO₂ and/or silicon(II) oxide.

In some embodiments, the average particle size of the first particles is less than or equal to 3.0 µm, optionally 0.001 µm to 3.0 µm, and optionally 0.01 µm to 1 µm. When the volume-based average particle size of the first particles falls within the above range, the first particles are not excessively large, making them easy to distribute uniformly. Moreover, the contact area between the first particles and the alkali metals and/or alkaline earth metals is relatively large, which helps to promote the redox reaction. Additionally, the small particle size of the first particles facilitates a light and thin application of the coating layer, thus reducing the overall thickness of the separator. This increases the space occupied by the positive electrode plate and/or the negative electrode plate, enhancing the energy density of the secondary battery. Exemplarily, the average particle size of the first particles may be 0.001 µm, 0.01 µm, 0.1 µm, 0.2 µm, 0.5 µm, 1 µm, 1.2 µm, 1.5 µm, 1.8 µm, 2.0 µm, 2.5 µm, 3.0 µm, or a range composed of any two of the above values.

In the present application, the average particle size of a material may be determined by testing Dv50, which represents the particle size corresponding to 50% of the cumulative volume distribution of the material. This can be measured using instruments and methods known in the art. For example, the test may be performed with reference to the GB/T 19077-2016 laser diffraction method for particle size distribution and using a laser particle size analyzer (e.g., Master Size 3000).

In some embodiments, based on the total weight of the coating layer, the content of the first particles in the coating layer is greater than or equal to 20%, optionally 30% to 60%. When the content of the first particles falls within the above range, the first particles can sufficiently react with alkali metals and/or alkaline earth metals, thereby reducing the risk of metallic dendrites piercing through the separator, and further enhancing the reliability of the secondary battery in usage. Exemplarily, the content of the first particles may be 20%, 25%, 30%, 35%, 40%, 45%, 50%, 60%, 70%, 80%, 90%, 95%, or a range composed of any two of the above values.

To enhance the heat resistance of the separator, in some embodiments, the coating layer further includes second particles. The second particles exhibit relatively good heat resistance and can improve the overall heat resistance of the separator. The second particles, within the operating voltage range of the secondary battery, will essentially not undergo oxidation and reduction reactions with metallic dendrites. In other words, the second particles are configured to not undergo oxidation and reduction reactions with alkali metals and/or alkaline earth metals at the nominal voltage of the secondary battery.

Exemplarily, the second particles include at least one of inorganic particles or organic particles.

In some embodiments, the inorganic particles include one or more of boehmite γ-AlOOH, aluminum oxide Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, zirconium titanate SrTiO₃, barium titanate BaTiO₃, and magnesium fluoride MgF₂.

In some embodiments, the organic particles include at least one of polystyrene, polyethylene, polyimide, melamine resin, phenolic resin, polypropylene, polyesters (e.g., polyethylene terephthalate, polyethylene naphthalate, and polybutylene terephthalate), polyphenylene sulfide, polyaramide, polyamideimide, polyimide, a copolymer of butyl acrylate and ethyl methacrylate, and a mixture thereof.

In some embodiments, the volume-based average particle size Dv50 of the second particles is less than or equal to 3µm, optionally 0.01µm to 1µm. When the volume-based average particle size of the second particles falls within the above range, the second particles are not excessively large, making them easy to distribute uniformly. Moreover, the small particle size of the second particle facilitates a light and thin application of the coating layer, thus reducing the overall thickness of the separator. This increases the space occupied by the positive electrode plate and/or the negative electrode plate, enhancing the energy density of the secondary battery. Exemplarily, the volume-based average particle size Dv50 of the second particles may be 0.01µm, 0.05µm, 0.1µm, 0.2µm, 0.5µm, 1µm, 1.2µm, 1.5µm, 1.8µm, 2.0µm, 2.5µm, 3.0µm, or a range composed of any two of the above values.

In some embodiments, based on the total weight of the coating layer, the ratio of the content of the second particles to the content of the first particles is less than or equal to 1, optionally 0.35 to 0.85. When the content ratio of the second particles to the first particles falls within the above range, it can both improve the heat resistance of the separator and reduce the risk of the separator being pierced through by metallic dendrites. Exemplarily, the content ratio of the second particles to the first particles may be 0.35, 0.40, 0.45, 0.50, 0.55, 0.60, 0.65, 0.70, 0.75, 0.80, 0.85, 0.90, 1, or a range composed of any two of the above values.

Exemplarily, the content of the second particles in the coating layer is greater than 0%, optionally 30% to 60%. Certainly, the content of the second particles in the coating layer may also be 0, that is, no second particles are added to the coating layer. Exemplarily, the content of the second particles may be 1%, 5%, 8%, 10%, 12%, 15%, 18%, 20%, 23%, 25%, 28%, 30%, 35%, 40%, 45%, 50%, 55%, 60%, or a range composed of any two of the above values.

In some embodiments, the coating layer includes a binder; optionally, the binder includes one or more of polyacrylate, acrylic acid, carboxymethylcellulose, polyvinylidene fluoride-co-trichloroethylene copolymer, polymethyl methacrylate, polyvinylpyrrolidone, polyvinyl acetate, polyethylene-co-vinyl acetate copolymer, polyethylene oxide, polyarylate, cellulose acetate, cellulose acetate butyrate, cellulose acetate propionate, polyvinylidene fluoride, polyacrylonitrile, polyvinyl alcohol, starch, hydroxypropyl cellulose, regenerated cellulose, tetrafluoroethylene, polyethylene, polypropylene, or cyanoethyl branched starch.

The coating layer in the embodiments of the present application may have a single-layer structure or a multi-layer structure. In some embodiments, the coating layer includes at least two sub-coating layers, with the first particles and the second particles disposed in different sub-coating layers. By arranging the first particles and the second particles in different layers, the likelihood of the second particles interfering with the first particles is reduced, which facilitates the first particles in mitigating the continued growth of dendrites.

As some examples, the at least two sub-coating layers include a first sub-coating layer and a second sub-coating layer, with the first particles disposed in the first sub-coating layer and the second particles disposed in the second sub-coating layer. The first sub-coating layer may be disposed between the first porous base film and the second sub-coating layer, or the first sub-coating layer may be disposed between the second porous base film and the second sub-coating layer.

The first particles in the first sub-coating layer have the effect of mitigating further growth of dendrites, and the second sub-coating layer exhibits excellent heat resistance. Compared to the second sub-coating layer, the first sub-coating layer may be disposed closer to the negative electrode plate, which is more conducive to the first sub-coating layer mitigating dendrite growth, thereby improving the reliability of the secondary battery in usage. Certainly, compared to the second sub-coating layer, the first sub-coating layer may also be disposed closer to the positive electrode plate.

In other embodiments, the coating layer includes at least two sub-coating layers, with each sub-coating layer including both the first particles and the second particles. Such an arrangement can enhance the heat resistance of each sub-coating layer and the effect of mitigating further growth of dendrites.

In some embodiments, the thickness of the coating layer may be greater than or equal to 0.3 µm, optionally 0.5 µm to 5 µm. This contributes to enhancing the energy density of the secondary battery. Exemplarily, the thickness of the coating layer may be 0.3 µm, 0.5 µm, 1 µm, 1.5 µm, 2 µm, 2.5 µm, 3 µm, 3.5 µm, 4 µm, 5 µm, or a range composed of any two of the above values.

In some embodiments, the melting point of the first porous base film is different from the melting point of the second porous base film. The melting point of the first porous base film is different from the melting point of the second porous base film, that is, their melting points are distinct, and their mechanical properties vary. The relative positions of the base film and the negative electrode plate can be arranged according to production requirements.

Optionally, the melting point of the first porous base film is denoted as Tₘ₁, measured in °C, and the melting point of the second porous base film is denoted as Tₘ₂, measured in °C, such that the separator satisfies: 1.05 ≤ Tₘ₁/Tₘ₂ ≤ 2.50. Exemplarily, Tₘ₁/Tₘ₂ may be 1.05, 1.20, 1.50, 1.80, 2.00, 2.20, 2.30, 2.50, or a range composed of any two of the above values.

Exemplarily, 160 °C ≤ Tₘ₁ ≤ 350 °C, optionally 180 °C ≤ Tₘ₁ ≤ 320 °C. Specifically, the melting point of the first porous base film may be 160 °C, 170 °C, 180 °C, 200 °C, 220 °C, 250 °C, 280 °C, 300 °C, 320 °C, 350 °C, or a range composed of any two of the above values.

Exemplarily, 120 °C ≤ Tₘ₂ ≤ 160 °C, optionally 135 °C ≤ Tₘ₂ ≤ 150 °C. Specifically, the melting point of the second porous base film may be 120 °C, 130 °C, 135 °C, 140 °C, 150 °C, or a range composed of any two of the above values.

In some embodiments, the thickness of the first porous base film is denoted as W₁, measured in µm; the thickness of the second porous base film is denoted as W₂, measured in µm, and W₁/W₂ ≥ 1.02, optionally 1.2 ≤ W₁/W₂ ≤ 5.0. The thicknesses of the first porous base film and the second porous base film differ as described above, resulting in differences in their mechanical properties. The mechanical strength of the first porous base film is greater, which is more advantageous for mitigating the risk of dendrites piercing through the first porous base film. Preferably, the first porous base film may be disposed close to the negative electrode plate, which is conducive to enhancing the reliability of the secondary battery in usage. Exemplarily, W₁/W₂ may be 1.02, 1.05, 1.20, 1.50, 1.80, 2.00, 2.20, 2.30, 2.50, 3.00, 3.50, 4.00, 4.50, 5.00, or a range composed of any two of the above values.

Exemplarily, 1 ≤ W₁ ≤ 12, optionally 3 ≤ W₁ ≤ 6. Specifically, the thickness of the first porous base film may be 1 µm, 2 µm, 3 µm, 5 µm, 6 µm, 8 µm, 10 µm, 11 µm, 12 µm, or a range composed of any two of the above values.

Exemplarily, 2 ≤ W₂ ≤ 12, optionally 3 ≤ W₂ ≤ 5. Specifically, the thickness of the second porous base film may be 2 µm, 2.5 µm, 3 µm, 4 µm, 5 µm, 6 µm, 8 µm, 10 µm, 11 µm, 12 µm, or a range composed of any two of the above values.

In some embodiments, the porosity of at least one of the first porous base film and the second porous base film is greater than or equal to 25%, optionally 28% to 41%. When the porosity falls within the above range, the air permeability of the base film can be ensured, which facilitates the migration of active ions. Moreover, due to the moderate porosity, the mechanical properties of the base film can also be ensured, providing good support for the coating layer.

The material of the base film is not particularly limited in the embodiments of the present application, and any known base film with good chemical stability and mechanical stability may be selected. For example, the base film may include at least one of a porous polyolefin-based resin film (e.g., at least one of polyethylene, polypropylene, and polyvinylidene fluoride), porous glass fiber, porous nonwoven fabric, and polyimide, as well as a polysulfone-based resin films (e.g., at least one of bisphenol A-type polysulfone, polyarylsulfone, and polyethersulfone). The base film may be a single-layer film or a multi-layer composite film. When the base film is a multi-layer composite film, the materials of the layers may be the same or different.

In some embodiments, the separator may further include an adhesive layer, which is disposed between the coating layer and the base film (e.g., between the coating layer and the first porous base film and/or between the coating layer and the second porous base film). The adhesive layer includes a first binder. The adhesive layer can not only prevent the coating layer from peeling off, enhancing the adhesion between the coating layer and the base film as well as improving the safety performance of the secondary battery, but also improve the interface between the separator and the electrode, thereby enhancing the cycle performance of the secondary battery.

Optionally, the first binder includes at least one of acrylic ester monomer homopolymers or copolymers, acrylic acid monomer homopolymers or copolymers, and fluorinated olefin monomer homopolymers or copolymers. The comonomers include, but are not limited to, at least one of the following: acrylic ester monomers, acrylic acid monomers, olefin monomers, halogen-containing olefin monomers, fluorinated ether monomers, and the like.

Optionally, the first binder includes a polyvinylidene fluoride-based polymer, such as a homopolymer of vinylidene fluoride monomer (VDF) and/or a copolymer of vinylidene fluoride monomer with comonomers. The comonomers may be at least one of olefin monomers, fluorinated olefin monomers, chlorinated olefin monomers, acrylic ester monomers, acrylic acid monomers, and fluorinated ether monomers. Optionally, the comonomers may include at least one of the following: trifluoroethylene (VF3), chlorotrifluoroethylene (CTFE), 1,2-difluoroethylene, tetrafluoroethylene (TFE), hexafluoropropylene (HFP), perfluoro(alkyl vinyl) ethers (e.g., perfluoro(methyl vinyl) ether PMVE, perfluoro(ethyl vinyl) ether PEVE, or perfluoro(propyl vinyl) ether PPVE), perfluoro(1,3-dioxolane), and perfluoro(2,2-dimethyl-1,3-dioxolane) (PDD).

In some embodiments, the machine direction thermal shrinkage of the separator is less than or equal to 1.0% at 250 °C for 1 hour.

In some embodiments, the transverse direction thermal shrinkage of the separator is less than or equal to 1.0% at 250 °C for 1 hour.

The separator in the embodiments of the present application exhibits a low thermal shrinkage in both the machine direction and the transverse direction at a high temperature of 250 °C, thereby enhancing the safety performance of the secondary battery.

In some embodiments, the air permeability of the separator is less than or equal to 500 s/100cc, optionally 150 s/100cc to 400 s/100cc.

In some embodiments, the machine direction tensile strength of the separator is greater than or equal to 600 kg/cm², optionally 800 kg/cm² to 2000 kg/cm².

In some embodiments, the transverse direction tensile strength of the separator is greater than or equal to 1000 kg/cm², optionally 1200 kg/cm² to 2500 kg/cm².

The separator in the embodiments of the present application exhibits high tensile strength in both the transverse direction and the machine direction, reducing the likelihood of damage to the separator when the secondary battery undergoes swelling, thereby enhancing the safety performance of the secondary battery.

In some embodiments, the ionic conductivity of the separator ranges from 0.5 mS/cm to 2.0 mS/cm, optionally 0.8 mS/cm to 1.5 mS/cm.

The separator in the embodiments of the present application exhibits good air permeability, thereby improving ionic conductivity and the capacity performance characteristics of the secondary battery.

In the embodiments of the present application, the thermal shrinkage, tensile strength, and air permeability of the separator have meanings well-known in the art and can be measured using methods known in the art. For example, all the tests may be performed with reference to standard GB/T 36363-2018.

### Preparation Method

In a second aspect, the present application provides a method for preparing a separator. The method can be used to prepare the separator described in any embodiment of the first aspect of the present application.

The method includes the following steps:
providing a first porous base film;
arranging a coating layer containing first particles on the surface of the first porous base film, where the first particles are configured to undergo a redox reaction with alkali metals and/or alkaline earth metals at the nominal voltage of the secondary battery; and
arranging a second porous base film on the surface of the coating layer facing away from the first porous base film to prepare the separator.

In some embodiments, the coating layer may be formed by applying a coating slurry onto the surface of the first porous base film and curing the coating slurry. The coating slurry may include a solvent, which may be water, for example, deionized water.

In some embodiments, the coating slurry may further include other components, such as dispersants, wetting agents, or binders.

In some embodiments, the coating process is performed using a coater. The model of the coater is not particularly limited in the embodiments of the present application; for example, a commercially available coater may be used. The coater includes a gravure roller, which is used to transfer the slurry onto the base film.

In some embodiments, the coating method may employ transfer coating, rotary spray coating, dip coating, or the like.

For some raw materials used in the method for preparing a separator in the present application and their content and other parameters, reference can be made to the separator of the first aspect of the embodiments of the present application, and the details will not be repeated here.

Unless otherwise specified, all raw materials used in the method for preparing a separator in the present application are commercially available.

### Secondary Battery

In a third aspect, the present application further provides a secondary battery.

Secondary batteries, also known as rechargeable batteries or storage batteries, refer to batteries that can continue to be used by reactivating their active materials through charging after discharging. In general, a secondary battery includes an electrode assembly and an electrolyte. The electrode assembly includes a positive electrode plate, a negative electrode plate, and a separator. The separator is disposed between the positive electrode plate and the negative electrode plate, primarily serving to prevent a short circuit between the positive electrode and the negative electrode while allowing active ions to pass through.

The type of the secondary battery is not particularly limited in the present application. For example, the secondary battery may be a lithium-ion battery, a sodium-ion battery, etc. Specifically, the secondary battery may be a lithium-ion secondary battery.

The secondary battery described in the present application includes the separator of the first aspect of the present application or a separator prepared by the method of the second aspect of the embodiments of the present application. The separator is disposed between the positive electrode plate and the negative electrode plate.

In some embodiments, the coating layer includes a first sub-coating layer and a second sub-coating layer. The first sub-coating layer includes the first particles and is located on the surface of the first porous base film facing the second porous base film. The second sub-coating layer includes second particles, and the second particles are configured to not undergo a redox reaction with alkali metals and/or alkaline earth metals under the nominal voltage of the secondary battery. That is, the second particles exhibit good electrochemical stability under the nominal voltage of the secondary battery and are less prone to a redox reaction with alkali metals and/or alkaline earth metals. The second sub-coating layer is located on the surface of the first sub-coating layer facing the second porous base film. The first sub-coating layer is located on one side of the second sub-coating layer close to the negative electrode plate. The first sub-coating layer is closer to the negative electrode plate, which can better mitigate the continued growth of metallic dendrites, thereby further improving the reliability of the secondary battery in usage.

### [Positive Electrode Plate]

In some embodiments, the positive electrode plate includes a positive electrode current collector and a positive electrode film layer disposed on at least one surface of the positive electrode current collector and including a positive electrode active material. For example, the positive electrode current collector is provided with two surfaces opposite to each other in its own thickness direction, and the positive electrode film layer is disposed on any one or both of the two opposite surfaces of the positive electrode current collector.

When the secondary battery of the present application is a lithium-ion battery, the positive electrode active material may include, but is not limited to, at least one of lithium-containing transition metal oxides, lithium-containing phosphates, and respective modified compounds thereof. Examples of the lithium transition metal oxides may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include, but are not limited to, at least one of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, in order to further improve the energy density of the secondary battery, the positive electrode active material of the lithium-ion battery may include at least one of lithium transition metal oxides with a general formula LiₐNi_{b}Co_{c}M_{d}OₑA_{f} and modified compounds thereof, where 0.8 ≤ a ≤ 1.2, 0.5 ≤ b < 1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti, and B, and A includes at least one of N, F, S, and Cl.

As an example, the positive electrode active material of the lithium-ion battery may include at least one of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

When the secondary battery of the present application is a sodium-ion battery, the positive electrode active material may include, but is not limited to, at least one of sodium-containing transition metal oxides, polyanionic materials (such as phosphates, fluorophosphates, pyrophosphates, and sulfates), and Prussian blue-type materials.

As an example, the positive electrode active material used for the sodium-ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, Prussian blue materials, and materials with general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, 0 ≤ x ≤ 2, X includes at least one of H⁺, Li⁺, Na⁺, K⁺, and NH₄⁺, M' is a transition metal cation, optionally at least one of V, Ti, Mn, Fe, Co, Ni, Cu, and Zn, and Y is a halogen anion, optionally at least one of F, Cl and Br.

In the present application, the modified compounds of the above positive electrode active materials may be obtained by doping modification and/or surface-coating modification of the positive electrode active materials.

In some embodiments, the positive electrode film layer further optionally includes a positive electrode conductive agent. The type of the positive electrode conductive agent is not particularly limited in the present application. As an example, the positive electrode conductive agent includes at least one of superconducting carbon, conductive graphite, acetylene black, carbon black, Ketjen black, carbon dots, carbon nanotubes, graphene, and carbon nanofibers. In some embodiments, based on the total weight of the positive electrode film layer, the mass percentage content of the positive electrode conductive agent is ≤ 5%.

In some embodiments, the positive electrode film layer further optionally includes a positive electrode binder. The type of the positive electrode binder is not particularly limited in the present application. As an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate-based resin. In some embodiments, based on the total weight of the positive electrode film layer, the mass percentage content of the positive electrode binder is ≤ 5%.

In some embodiments, a metal foil or a composite current collector may be used as the positive electrode current collector. As an example of the metal foil, an aluminum foil may be used. The composite current collector may include a polymer material substrate and a metal material layer formed on at least one surface of the polymer material substrate. As an example, the metal material may include at least one of aluminum, aluminum alloy, nickel, nickel alloy, titanium, titanium alloy, silver, and silver alloy. As an example, the polymer material substrate may include at least one of polypropylene (PP), polyethylene terephthalate (PET), polybutylene terephthalate (PBT), polystyrene (PS), and polyethylene (PE).

The positive electrode film layer is typically formed by coating positive electrode slurry onto a positive electrode current collector, followed by drying and cold pressing. The positive electrode slurry is typically formed by dispersing a positive electrode active material, an optional conductive agent, an optional binder, and any other components in a solvent and stirring them uniformly. The solvent may be N-methylpyrrolidone (NMP) but is not limited thereto.

### [Negative Electrode Plate]

In some embodiments, the negative electrode plate includes a negative electrode current collector and a negative electrode film layer disposed on at least one surface of the negative electrode current collector and including a negative electrode active material. For example, the negative electrode current collector is provided with two surfaces opposite to each other in its own thickness direction, and the negative electrode film layer is disposed on any one or both of the two opposite surfaces of the negative electrode current collector.

The negative electrode active material may be any negative electrode active material known in the art for use in the secondary batteries. As an example, the negative electrode active material may include, but is not limited to, at least one of natural graphite, artificial graphite, soft carbon, hard carbon, silicon-based film materials, tin-based film materials, and lithium titanate. The silicon-based film materials may include at least one of elemental silicon, silicon oxides, silicon-carbon composites, silicon-nitrogen composites, and silicon alloy materials. The tin-based film material may include at least one of elemental tin, tin oxides, and tin alloy materials.

In some embodiments, the negative electrode film layer further optionally includes a negative electrode conductive agent. The type of the negative electrode conductive agent is not particularly limited in the present application. As an example, the negative electrode conductive agent may include at least one of superconducting carbon, conductive graphite, acetylene black, carbon black, Ketjen black, carbon dots, carbon nanotubes, graphene, and carbon nanofibers. In some embodiments, based on the total weight of the negative electrode film layer, the mass percentage content of the negative electrode conductive agent is ≤ 5%.

In some embodiments, the negative electrode film layer further optionally includes a negative electrode binder. The type of the negative electrode binder is not particularly limited in the present application. As an example, the negative electrode binder may include at least one of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS). In some embodiments, based on the total weight of the negative electrode film layer, the mass percentage content of the negative electrode binder is ≤ 5%.

In some embodiments, the negative electrode film layer further optionally includes other auxiliary agents. As an example, the other auxiliary agents may include thickeners, such as sodium carboxymethylcellulose (CMC) or PTC thermistor materials. In some embodiments, based on the total weight of the negative electrode film layer, the mass percentage content of the other auxiliary agents is ≤ 2%.

In some embodiments, a metal foil or a composite current collector may be used as the negative electrode current collector. As an example of the metal foil, a copper foil may be used. The composite current collector may include a polymer material substrate and a metal material layer formed on at least one surface of the polymer material substrate. As an example, the metal material may include at least one of copper, copper alloy, nickel, nickel alloy, titanium, titanium alloy, silver, and silver alloy. As an example, the polymer material substrate may include at least one of polypropylene (PP), polyethylene terephthalate (PET), polybutylene terephthalate (PBT), polystyrene (PS), and polyethylene (PE).

The negative electrode film layer is typically formed by coating negative electrode slurry onto a negative electrode current collector, followed by drying and cold pressing. The negative electrode slurry is typically formed by dispersing a negative electrode active material, an optional conductive agent, an optional binder, and other optional auxiliary agents in a solvent and stirring them uniformly. The solvent may be N-methylpyrrolidone (NMP) or deionized water, but is not limited thereto.

The negative electrode plate does not exclude additional functional layers other than the negative electrode film layer. For example, in some embodiments, the negative electrode plate of the present application further includes a conductive bottom coating layer (e.g., composed of a conductive agent and a binder) interposed between the negative electrode current collector and the negative electrode film layer and disposed on the surface of the negative electrode current collector. In some other embodiments, the negative electrode plate according to the present application further includes a protective layer covering the surface of the negative electrode film layer.

### [Electrolyte]

During the charging and discharging processes of the secondary battery, active ions are intercalated and deintercalated back and forth between the positive electrode plate and the negative electrode plate, and the electrolyte plays a role in conducting the active ions between the positive electrode plate and the negative electrode plate. The type of electrolyte is not particularly limited in the present application, which can be selected based on actual needs.

The electrolyte includes an electrolyte salt and a solvent. The types of the electrolyte salt and the solvent are not particularly limited and may be selected based on actual needs.

When the secondary battery of the present application is a lithium-ion battery, as an example, the electrolyte salt may include, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluorobis(oxalato)phosphate (LiDFOP), and lithium tetrafluoro(oxalato)phosphate (LiTFOP).

When the secondary battery of the present application is a sodium-ion battery, as an example, the electrolyte salt may include, but is not limited to, at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalate)borate (NaBOB), sodium difluorophosphate (NaPO₂F₂), sodium difluorobis(oxalato)phosphate (NaDFOP), and sodium tetrafluoro(oxalato)phosphate (NaTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolyte further optionally includes an additive. For example, the additive may include a negative electrode film-forming additive or a positive electrode film-forming additive, or may include an additive capable of improving certain properties of the battery, such as an additive for improving the overcharge performance of the battery, an additive for improving the high-temperature performance of the battery, or an additive for improving the low-temperature power performance of the battery.

In some embodiments, the positive electrode plate, the separator, and the negative electrode plate may be manufactured into an electrode assembly through a winding process and/or a stacking process.

In some embodiments, the secondary battery may include an outer packaging. The outer packaging can be used for packaging the electrode assembly and the electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, such as at least one of polypropylene (PP), polybutylene terephthalate (PBT), and polybutylene succinate (PBS).

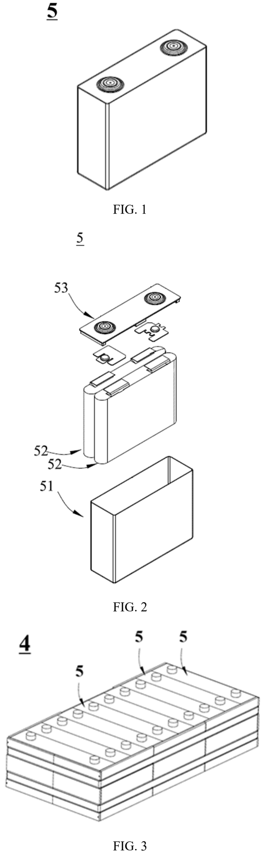

The present application does not particularly limit the shape of the secondary battery, and it may have a cylindrical shape, a prismatic shape, or any other shape. FIG. 1 shows a secondary battery 5 having a square structure as one example.

In some embodiments, as shown in FIG. 2, the outer packaging may include a housing 51 and a cover plate 53. The housing 51 may include a bottom plate and side plates connected to the bottom plate, and the bottom plate and the side plates define, in an enclosing manner, an accommodating cavity. The housing 51 is provided with an opening communicating with the accommodating cavity, and the cover plate 53 is configured for lidding the opening to close the accommodating cavity. The positive electrode plate, the negative electrode plate, and the separator may form the electrode assembly 52 through a winding process and/or a stacking process. The electrode assembly 52 is packaged in the accommodating cavity. The electrolyte is infiltrated into the electrode assembly 52. The number of electrode assemblies 52 included in the secondary battery 5 may be one or more and may be adjusted as needed.

Methods for preparing a secondary battery in the present application are well known. In some embodiments, the positive electrode plate, the separator, the negative electrode plate, and the electrolyte may be assembled to form a secondary battery. As an example, the positive electrode plate, the separator, and the negative electrode plate may form an electrode assembly through a winding process and/or a stacking process. The electrode assembly is placed in an outer packaging, dried, and then injected with electrolyte. After undergoing processes such as vacuum packaging, standing, formation, and shaping, a secondary battery is obtained.

In some embodiments of the present application, the secondary battery according to the present application may be assembled into a battery module. The number of secondary batteries included in the battery module may be a plurality, and the specific number may be adjusted according to the application and capacity of the battery module.

FIG. 3 is a schematic diagram of a battery module 4 as one example. As shown in FIG. 3, in the battery module 4, a plurality of secondary batteries 5 may be disposed in sequence along a length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the above battery module may further be assembled into a battery pack; the number of the battery modules included in the battery pack may be adjusted based on the application and capacity of the battery pack.

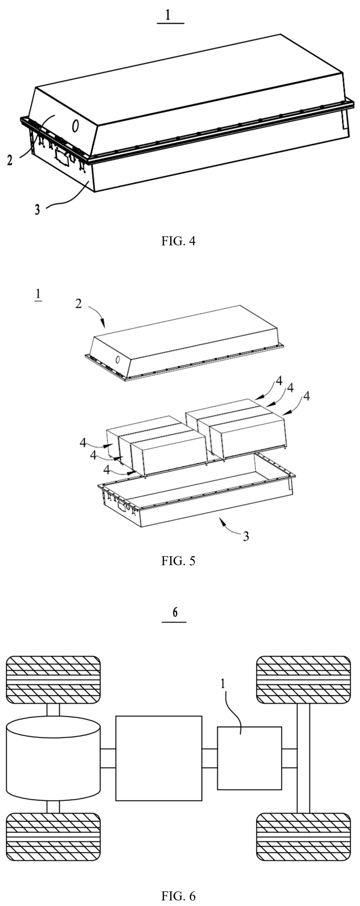

FIGs. 4 and 5 are schematic diagrams of a battery pack 1 as one example. As shown in FIGs. 4 and 5, the battery pack 1 may include a battery case and a plurality of battery modules 4 disposed in the battery case. The battery case includes an upper case body 2 and a lower case body 3. The upper case body 2 is configured for lidding the lower case body 3 and forming a closed space for accommodating the battery modules 4. The plurality of battery modules 4 may be arranged in any manner in the battery case.

### Electric Device

In a fourth aspect of the embodiments of the present application, an electric device is further provided. The electric device includes at least one of the secondary battery, the battery module, or the battery pack according to the present application. The secondary battery, the battery module, or the battery pack may be used as a power source for the electric device, and they may also be used as an energy storage unit for the electric device. The electric device may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

The electric device may select the secondary battery, battery module, or battery pack according to its usage requirements.

FIG. 6 is a schematic diagram of an electric device as one example. The electric device is a pure electric vehicle, a hybrid electric vehicle, a plug-in hybrid electric vehicle, or the like. To meet the requirements of the electric device for high power and high energy density of the battery, the battery pack or the battery module may be used.

As another example, the electric device may be a mobile phone, a tablet computer, a notebook computer, or the like. The electric device typically requires a lightweight and thin design and may use a secondary battery as the power source.

### Examples

The following examples more specifically describe the content disclosed in the present application. These examples are intended for illustrative purposes only, since various modifications and changes within the scope of the content disclosed in the present application will be apparent to those skilled in the art. Unless otherwise stated, all parts, percentages, and ratios reported in the following examples are based on mass, and all reagents used in the examples are commercially available or synthesized according to conventional methods and can be used directly without further treatment, and the instruments used in the examples are commercially available.

### Example 1

### Preparation of Separator

Providing a PP base film: The PP base film has a thickness of 6 µm, porosity of 40%, and ionic conductivity of 1.20 mS/cm.

Providing a PE base film: The PE base film has a thickness of 5 µm, porosity of 35%, and ionic conductivity of 1.0 mS/cm.

Preparing a first coating slurry: Molybdenum disulfide and a water-soluble polyacrylic acid binder are mixed uniformly in a mass ratio of 95:5 in an appropriate amount of deionized water solvent, resulting in the first coating slurry. The volume-based average particle size Dv50 of the molybdenum disulfide is 0.10 µm.

Preparing a second coating slurry: Aluminum oxide and a water-soluble polyacrylic acid binder are mixed uniformly in a mass ratio of 95:5 in an appropriate amount of deionized water solvent, resulting in the second coating slurry. The volume-based average particle size Dv50 of the aluminum oxide is 0.10 µm.

### Preparing Separator:

The prepared first coating slurry is applied to one surface of the PE base film using a coater. Through a drying process, a first sub-coating layer is obtained.

The prepared second coating slurry is applied to the surface of the first sub-coating layer using a coater to form a second sub-coating layer. The PP base film and PE base film are subjected to hot press molding to form a separator. In the separator, the first sub-coating layer and the second sub-coating layer are located between the PP base film and the PE base film, with the first sub-coating layer close to the PE base film and the second sub-coating layer close to the PP base film. In the coating layers, the content of molybdenum disulfide A is 47.5%, the content of aluminum oxide B is 47.5%, and the ratio of B/A is 1.00.

### Preparation of Positive Electrode Plate

An aluminum foil with a thickness of 12 µm is used as a positive electrode current collector.

The positive electrode active material LiNi_{0.8}Co_{0.1}Mn_{0.1}O₂ (NCM811), conductive agent carbon black (Super P), and a polyvinylidene fluoride (PVDF) binder are mixed uniformly in a mass ratio of 96.2:2.7:1.1 in an appropriate amount of N-methylpyrrolidone (NMP) solvent, resulting in a positive electrode slurry. The positive electrode slurry is coated onto the aluminum foil positive electrode current collector, and through processes such as drying, cold pressing, slitting, and cutting, a positive electrode plate is prepared.

### Preparation of Negative Electrode Plate

An aluminum foil with a thickness of 8 µm is used as a negative electrode current collector.

Artificial graphite, as the negative electrode active material, conductive agent Super P, thickener CMC, and binder styrene-butadiene rubber (SBR) are mixed uniformly in deionized water to prepare a negative electrode slurry. In the solid components of the negative electrode slurry, the mass ratio of artificial graphite, Super P, CMC, and binder styrene-butadiene rubber (SBR) is 96.4:0.7:1.8:1.1. The negative electrode slurry is coated onto the copper foil negative electrode current collector, and after drying, cold pressing, edge trimming, plate cutting, and slitting, the negative electrode plate is prepared.

### Preparation of Electrolyte

In an environment with a water content of less than 10 ppm, the non-aqueous organic solvents ethylene carbonate (EC) and diethyl carbonate (DMC) are mixed at a volume ratio of 1:1 to obtain an electrolyte solvent. Subsequently, lithium salt lithium hexafluorophosphate is mixed with the mixed solvent to prepare an electrolyte with a lithium salt concentration of 1 mol/L.

### Preparation of Secondary Battery

The positive electrode plate, separator, and negative electrode plate are stacked and wound in sequence to obtain an electrode assembly. The electrode assembly is placed into an outer packaging, dried, and then injected with the electrolyte. After undergoing processes such as vacuum packaging, standing, formation, and shaping, a secondary battery is obtained.

### Examples 2-1 to 2-6

The secondary battery is prepared using a method similar to Example 1, except that the material of at least one of the first particle or the second particle is replaced.

### Examples 3-1 to 3-4

The secondary battery is prepared using a method similar to Example 1, except that the volume-based average particle size of the first particle is adjusted.

### Examples 4-1 to 4-4

The secondary battery is prepared using a method similar to Example 1, except that the contents of the first particle and the second particle are adjusted.

### Example 5

### Preparation of Separator

Providing a PP base film: The PP base film has a thickness of 6 µm, porosity of 40%, and ionic conductivity of 1.20 mS/cm.

Providing a PE base film: The PE base film has a thickness of 5 µm, porosity of 35%, and ionic conductivity of 1.0 mS/cm.

Preparing a coating slurry: Molybdenum disulfide and a water-soluble polyacrylic acid binder are mixed uniformly in a mass ratio of 95.0:5.0 in an appropriate amount of deionized water solvent, resulting in the coating slurry.

### Preparing Separator:

The prepared coating slurry is applied to one surface of the PE base film using a coater to form a coating layer. The PP base film and PE base film are subjected to hot press molding to obtain a separator, with the coating layer located between the PP base film and the PE base film. In the coating layer, the content of molybdenum disulfide is 95.0%.

### Example 6

### Preparation of Separator

Providing a PP base film: The PP base film has a thickness of 6 µm, porosity of 40%, and ionic conductivity of 1.20 mS/cm.

Providing a PE base film: The PE base film has a thickness of 5 µm, porosity of 35%, and ionic conductivity of 1.0 mS/cm.

Preparing a coating slurry: Molybdenum disulfide, aluminum oxide, and a water-soluble polyacrylic acid binder are mixed uniformly in a mass ratio of 47.5:47.5:5 in an appropriate amount of deionized water solvent, resulting in the coating slurry.

### Preparing Separator:

The prepared coating slurry is applied to one surface of the PE base film using a coater to form a coating layer. The PP base film and PE base film are subjected to hot press molding to obtain a separator, with the coating layer located between the PP base film and the PE base film. In the coating layers, the content of molybdenum disulfide A is 47.5%, the content of aluminum oxide B is 47.5%, and the ratio of B/A is 1:1.

### Comparative Example 1

The secondary battery is prepared using a method similar to Example 1, except that the preparation steps for the separator are as follows:
Providing a PE base film: The PE base film has a thickness of 5 µm, porosity of 35%, and ionic conductivity of 1.0 mS/cm.

Preparing a first coating slurry: Molybdenum disulfide and a water-soluble polyacrylic acid binder are mixed uniformly in a mass ratio of 95:5 in an appropriate amount of deionized water solvent, resulting in the first coating slurry.

### Coating:

The prepared first coating slurry is applied to one surface of the PE base film using a coater. Through a drying process, a first sub-coating layer is obtained. After cutting, the separator is prepared.

### Comparative Example 2

The secondary battery is prepared using a method similar to Example 1, except that the preparation steps for the separator are as follows:
Providing a PP base film: The PP base film has a thickness of 6 µm, porosity of 40%, and ionic conductivity of 1.20 mS/cm.
Providing a PE base film: The PE base film has a thickness of 5 µm, porosity of 35%, and ionic conductivity of 1.0 mS/cm.

Preparing a coating slurry: Alumina particles and a water-soluble polyacrylic acid binder are mixed uniformly in a mass ratio of 95:5 in an appropriate amount of deionized water solvent, resulting in the coating slurry.

Preparing a separator: The prepared coating slurry is applied to one surface of the PE base film using a coater to form a coating layer. The PP base film and PE base film are subjected to hot press molding, ensuring that the coating layer is located between the PP base film and the PE base film, thereby fabricating the separator.

Relevant parameters for the comparative examples and examples are shown in Table 1.

The test results are shown in Table 1.

### Test Section

### 1. Thermal shrinkage testing of the separator

Sample preparation: The separators prepared in the above examples and comparative examples are punched by a punching machine into samples with a width of 50 mm and a length of 100 mm along the TD and MD directions. Five parallel samples are taken and placed on A4 paper, and the A4 paper with the samples is then positioned on corrugated cardboard with a thickness of 1 mm to 5 mm.

Sample testing: The temperature of a forced-air oven is set to 150 °C. Once the temperature reaches the set temperature and stabilizes for 30 min, the A4 paper placed on the corrugated cardboard is placed into the forced-air oven, and the timing starts. After the set time (1 h in the present application) is reached, the length and width of the separator are measured, with the values marked as a and b, respectively.

Calculation of thermal shrinkage: Machine direction (MD) thermal shrinkage = [(100-a)/100] × 100%; transverse direction (TD) thermal shrinkage = [(50-b)/50] × 100%. The average value of five parallel samples is taken as the test result.

### 2. Cycle Performance of Secondary Battery

At 25 °C, the secondary batteries prepared in the above examples and comparative examples are charged at a constant current of 0.5 C until the voltage reaches 3.65 V. Then, constant voltage charging is performed at 3.65 V until the current ≤ 0.05 C. Subsequently, the battery is discharged at a constant current of 0.5 C until the voltage reaches 2.5 V. This is one charge-discharge cycle, and the discharge capacity at this point is recorded as the first-cycle discharge capacity of the battery. The charge and discharge cycles are repeated in this manner, and the number of cycles is recorded when the capacity decreases to 80%.

### Test Results

The test results are shown in Table 1.

**Table 1**

| Item | Separator | | | | | | | | | | | | | Number of cycles of secondary battery |
|---|---|---|---|---|---|---|---|---|---|---|---|---|---|---|
| | Coating layer | | | | | | | 250°C/1h Thermal shrinkage (%) | | Air permeability (s/100mL) | Transverse direction tensile strength (kgf/cm²) | Machine direction tensile strength (kgf/cm²) | Ionic conductivity (mS/cm) | |
| | First sub-coating layer | | Second sub-coating layer | | Content of first particles in coating layer A (%) | Content of second particles in coating layer B (%) | B/A | | | | | | | |
| | Particle | | Particle | | | | | Machine direction thermal shrinkage MD | Transverse direction thermal shrinkage TD | | | | | |
| | Material | Volume-based average particle size Dv50 (µm) | Material | Volume-based average particle size Dv50 (µm) | | | | | | | | | | |
| Example 1 | Molybdenum disulfide | 0.10 | Aluminum oxide | 0.1 | 47.5 | 47.5 | 1.00 | 0.50 | 0.40 | 258 | 1580 | 2232 | 1.22 | 2950 |
| Example 2-1 | Conductive carbon black | 0.10 | Aluminum oxide | 0.1 | 47.5 | 47.5 | 1.00 | 0.40 | 0.50 | 243 | 1443 | 2430 | 1.32 | 3024 |
| Example 2-2 | Manganese dioxide | 0.10 | Aluminum oxide | 0.1 | 47.5 | 47.5 | 1.00 | 0.50 | 0.60 | 254 | 1643 | 2554 | 1.16 | 2981 |
| Example 2-3 | Cobalt oxide | 0.10 | Aluminum oxide | 0.1 | 47.5 | 47.5 | 1.00 | 0.50 | 0.40 | 267 | 1560 | 2278 | 0.99 | 2962 |
| Example 2-4 | Iron oxide | 0.10 | Aluminum oxide | 0.1 | 47.5 | 47.5 | 1.00 | 0.60 | 0.50 | 255 | 1798 | 2335 | 1.02 | 2975 |
| Example 2-5 | Nickel oxide | 0.10 | Aluminum oxide | 0.1 | 47.5 | 47.5 | 1.00 | 0.40 | 0.60 | 270 | 1887 | 2087 | 1.10 | 2985 |
| Example 2-6 | Molybdenum disulfide | 0.10 | Barium titanate | 0.1 | 47.5 | 47.5 | 1.00 | 0.30 | 0.40 | 278 | 1537 | 2426 | 1.17 | 2953 |
| Example 3-1 | Molybdenum disulfide | 0.01 | Aluminum oxide | 0.1 | 47.5 | 47.5 | 1.00 | 0.20 | 0.30 | 234 | 1932 | 2698 | 1.03 | 2978 |
| Example 3-2 | Molybdenum disulfide | 0.05 | Aluminum oxide | 0.1 | 47.5 | 47.5 | 1.00 | 0.30 | 0.30 | 242 | 1834 | 2650 | 1.15 | 2983 |
| Example 3-3 | Molybdenum disulfide | 2.00 | Aluminum oxide | 0.1 | 47.5 | 47.5 | 1.00 | 0.60 | 0.50 | 286 | 1465 | 2525 | 0.89 | 2945 |
| Example 3-4 | Molybdenum disulfide | 3.00 | Aluminum oxide | 0.1 | 47.5 | 47.5 | 1.00 | 0.70 | 0.60 | 295 | 1350 | 2178 | 0.83 | 2940 |
| Example 4-1 | Molybdenum disulfide | 0.10 | Aluminum oxide | 0.1 | 60.0 | 35.0 | 0.58 | 0.60 | 0.70 | 267 | 1670 | 1833 | 0.95 | 2955 |
| Example 4-2 | Molybdenum disulfide | 0.10 | Aluminum oxide | 0.1 | 70.0 | 25.0 | 0.35 | 0.70 | 0.70 | 276 | 1630 | 2067 | 0.92 | 2967 |
| Example 4-3 | Molybdenum disulfide | 0.10 | Aluminum oxide | 0.1 | 30.0 | 65.0 | 2.17 | 0.40 | 0.30 | 256 | 1735 | 2626 | 0.89 | 2934 |
| Example 4-4 | Molybdenum disulfide | 0.10 | Aluminum oxide | 0.1 | 20.0 | 75.0 | 3.75 | 0.30 | 0.30 | 257 | 1976 | 2687 | 0.97 | 2925 |
| Example 5 | Molybdenum disulfide | 0.10 | None | None | 95.0 | None | None | 0.75 | 0.80 | 275 | 1660 | 2650 | 0.88 | 2930 |
| Example 6 | Molybdenum disulfide and aluminum oxide | 0.10 | None | / | 47.5 | 47.5 | / | 0.5 | 0.5 | 250 | 1550 | 2500 | 0.95 | 2925 |
| Comparative Example 1 | Molybdenum disulfide | 0.10 | None | None | 95.0 | None | None | 0.90 | 0.95 | 270 | 1380 | 2000 | 0.75 | 2820 |
| Comparative Example 2 | None | None | Aluminum oxide | 0.10 | None | 95.0 | None | 0.60 | 0.50 | 270 | 1400 | 2150 | 0.87 | 2852 |

From Table 1, it can be seen that in the embodiments of the present application, a coating layer containing specific materials is disposed between two base films, such that the coating layer is less likely to come into contact with the electrolyte, negative electrode plate, etc., during the normal charging and discharging processes of a secondary battery, thereby reducing side reactions. As the number of dendrites deposited on the negative electrode plate increases, the dendrites may puncture one of the base films outside the coating layer and come into direct contact with the coating layer. The first particles in the coating layer can undergo redox reactions with the tips of the dendrites. This reduces the risk of the dendrites further puncturing the other base film, which could lead to a short circuit between the positive electrode plate and the negative electrode plate. Consequently, the reliability of the secondary battery in usage is enhanced.

In Comparative Example 1, a coating layer containing molybdenum disulfide is provided on the surface of the base film of the separator. During the cycling process of the lithium-ion battery, the first particles, molybdenum disulfide, in the coating layer come into contact with the negative electrode plate, potentially leading to the premature consumption of molybdenum disulfide.

In Comparative Example 2, although two base films are provided, and a coating layer is disposed between the two base films, the particles in the coating layer cannot undergo a redox reaction with the dendrites, resulting in minimal effect on the mitigation of dendrites.

Moreover, compared to Example 1, Examples 3-1 to 3-4 can achieve a certain degree of adjustment in the passivation of dendrite growth by adjusting the particle size of the first particles, thereby improving the reliability of the secondary battery in usage. Compared to Example 1, in Examples 4-1 to 4-4, the usage amount of the first particles was adjusted. In the case where the content of the first particles is greater than the content of the second particles, the effect of passivating dendrite growth is better, which can further enhance the reliability of the secondary battery in usage. In Examples 5 and 6, the coating layers have a single-layer structure, yet they can still enable the first particles to exhibit an excellent passivation effect on dendrites.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A separator, comprising:
a first porous base film and a second porous base film; and
a coating layer disposed between the first porous base film and the second porous base film, wherein the coating layer comprises first particles, and the first particles comprise at least one of molybdenum disulfide, silicon oxide, transition metal oxide, or conductive carbon particles.

2. The separator according to claim 1, wherein
the first particles comprise at least one of the molybdenum disulfide or the transition metal oxide.

3. The separator according to claim 1 or 2, wherein
the silicon oxide comprises at least one of silicon(II) oxide or silicon dioxide; and/or
the transition metal oxide comprises one or more of manganese dioxide, cobalt oxide, iron oxide, or nickel oxide; and/or
the conductive carbon particles comprise one or more of conductive carbon black, carbon nanotubes, graphite, or graphene.

4. The separator according to any one of claims 1 to 3, wherein based on a total weight of the coating layer, a content of the first particles is greater than or equal to 20%, optionally 30% to 60%.

5. The separator according to any one of claims 1 to 4, wherein an average particle size of the first particles is less than or equal to 3 µm, optionally 0.01 µm to 1 µm.

6. The separator according to any one of claims 1 to 5, wherein the coating layer further comprises second particles, and the second particles do not undergo oxidation and reduction reactions within an operating voltage range of a secondary battery;
optionally, the second particles comprise at least one of inorganic particles or organic particles.

7. The separator according to claim 6, wherein based on the total weight of the coating layer, a ratio of a content of the second particles to the content of the first particles is less than or equal to 1, optionally 0.35 to 0.85.

8. The separator according to any one of claims 1 to 7, wherein the coating layer comprises at least two sub-coating layers, with the first particles and the second particles disposed in different sub-coating layers.

9. The separator according to any one of claims 1 to 8, wherein the coating layer further comprises a binder; optionally, the binder comprises one or more of polyacrylate, acrylic acid, carboxymethylcellulose, polyvinylidene fluoride-co-trichloroethylene copolymer, polymethyl methacrylate, polyvinylpyrrolidone, polyvinyl acetate, polyethylene-co-vinyl acetate copolymer, polyethylene oxide, polyarylate, cellulose acetate, cellulose acetate butyrate, cellulose acetate propionate, polyvinylidene fluoride, polyacrylonitrile, polyvinyl alcohol, starch, hydroxypropyl cellulose, regenerated cellulose, tetrafluoroethylene, polyethylene, polypropylene, or cyanoethyl branched starch.

10. The separator according to any one of claims 1 to 9, wherein a melting point of the first porous base film is different from a melting point of the second porous base film.

11. The separator according to any one of claims 1 to 10, wherein the melting point of the first porous base film is denoted as Tₘ₁, and the melting point of the second porous base film is denoted as Tₘ₂, such that the separator satisfies: 1.05 ≤ Tₘ₁/Tₘ₂ ≤ 2.50;
optionally, 160 °C ≤ Tₘ₁ ≤ 350 °C; and/or
optionally, 120 °C ≤ Tₘ₂ ≤ 180 °C.

12. The separator according to claim 10 or 11, wherein the coating layer comprises a first sub-coating layer and a second sub-coating layer, the first sub-coating layer comprising the first particles, and the second sub-coating layer comprising the second particles, wherein
the first sub-coating layer is disposed between the first porous base film and the second sub-coating layer, or
the first sub-coating layer is disposed between the second porous base film and the second sub-coating layer.

13. The separator according to any one of claims 1 to 12, wherein
a thickness of the first porous base film is denoted as W₁, measured in µm;
a thickness of the second porous base film is denoted as W₂, measured in µm, and
W₁/W₂ ≥ 1.02, optionally 1.2 ≤ W₁/W₂ ≤ 5.0.

14. The separator according to claim 13, wherein
1 ≤ W₁ ≤ 12, optionally 3 ≤ W₁ ≤ 6; and/or
2 ≤ W₂ ≤ 12, optionally 3 ≤ W₂ ≤ 5.

15. The separator according to any one of claims 1 to 14, wherein the separator satisfies at least one of conditions (1) to (6):
(1) a machine direction thermal shrinkage of the separator is less than or equal to 1.0% at 250 °C for 1 hour;
(2) a transverse direction thermal shrinkage of the separator is less than or equal to 1.0% at 250 °C for 1 hour;
(3) an air permeability of the separator is less than or equal to 500 s/100cc, optionally 150 s/100cc to 400 s/100cc;
(4) a machine direction tensile strength of the separator is greater than or equal to 600 kg/cm², optionally 800 kg/cm² to 2000 kg/cm²;
(5) a transverse direction tensile strength of the separator is greater than or equal to 1000 kg/cm², optionally 1200 kg/cm² to 2500 kg/cm²; and
(6) an ionic conductivity of the separator ranges from 0.5 mS/cm to 2.0 mS/cm, optionally 0.8 mS/cm to 1.5 mS/cm.

16. A secondary battery, comprising the separator according to any one of claims 1 to 14.

17. The secondary battery according to claim 16, wherein the secondary battery comprises a positive electrode plate and a negative electrode plate, and the separator is disposed between the positive electrode plate and the negative electrode plate;
the second porous base film of the separator faces the negative electrode plate.

18. An electric device, comprising the secondary battery according to claim 16 or 17.
